# EUROPEAN PATENT SPECIFICATION

(11) **EP 3 677 531 B1**
(45) Date of publication and mention of the grant of the patent: **11.10.2023**
(21) Application number: 18851016.8
(22) Date of filing: 10.08.2018
(51) Int. Cl.: B65H 19/30, C08J 5/18, B65H 19/22

(54) **METHOD OF REMOVING A ROLL OF WOUND POLYMER FILM WITHOUT A CORE FROM A MANDREL**
VERFAHREN ZUM ENTFERNEN EINER ROLLE AUS EINEM GEWICKELTEN POLYMERFILM OHNE KERN AUS EINER SPINDEL
PROCÉDÉ POUR ENLEVER DE LA BROCHE UN ROULEAU DE FILM POLYMÈRE BOBINÉ SANS ÂME

(30) Priority: 28.08.2017 EA 201700406
(43) Date of publication of application: 08.07.2020
(73) Proprietor: Ivanov, Aleksandr Sergeevich, St.Petersburg 194156 (RU)
(72) Inventor: Ivanov, Aleksandr Sergeevich, St.Petersburg 194156 (RU)
(74) Representative: RVDB
(86) International application number: PCT/EA2018/000005
(87) International publication number: WO 2019/042517

(56) References cited:
- EP-A1- 0 710 212
- EP-A1- 2 432 719
- EP-A2- 0 842 881
- WO-A1-2006/012933
- RU-C2- 2 588 160
- US-A1- 2008 035 781
- US-B2- 6 412 729

## Description

A technical solution proposed herein relates to rewinding of plastic film out of big rolls to smaller ones, suitable for wrapping different goods and loads, wherein the film is wounded in a roll without a spool directly onto the spindle of the rewinding unit, and may be applied in manual and automated wrapping machines.

Plastic stretch film has a property of relaxation and being wound on the shaft (spindle) of the wounding device, without a spool, it remains under stress and toughly embraces the shaft. In this state, the roll cannot be removed from the spindle without bringing damage to the film in the roll. However, due to said property of the film, the inner diameter of the roll can be enlarged from the inside by air pressure so that the roll can be pushed from the spindle in an "expanded" state. In this method sliding friction produced between the internal surface of the roll and the material of the spindle can be reduced with a specific sliding coating of the spindle surface, the spindle having a conical shape.

Document EP 2 432 719 A1 discloses a method and an apparatus for winding up and removing coreless rolls of stretch film.

Document RU 2588160 discloses covering of the peripheral spindle wall with a protective surface layer of hard chrome, forming an outer surface for roll winding, which is sandblasted to a medium roughness of 6 to 6.5 µm. The roll is removed from the spindle by step-by-step feed of compressed air, from one end of the spindle to another through its perforated walls.

However, this technical solution has drawbacks consisting in an increased power consumption, due to high flow rate of the compressed air from the beginning of the winding cycle to its end needed for reducing friction between the internal roll surface and the spindle, and difficult process of making the spindle surface with a protective layer.

Document EP 2 688 823 discloses making of spindle out of tubular steel body, e.g. obtained by drawing, properly perforated and having a small taper, e.g. at 2 or 3 degrees, with a smaller diameter at the front end for the roll to be removed.

However, a drawback of such technical solution is complexity of making of the spindle, as a certain taper angle of the spindle must be performed.

Document US 7641141 discloses a method of winding and removal of coreless plastic film rolls from the spindle, comprising: providing said spindle with an air chamber having perforations on a peripheral wall; winding up the plastic film directly on the perforated wall of the spindle; causing a radial expansion of internal turns of the roll; supporting the expanded roll by a cushioning of pressurized air, during withdrawal of the roll; at a removal of a wound up roll, causing an expansion of some internal turns of the roll by feeding a compressed air flow through the air-chamber of the perforated wall of the spindle, into the internal turns of the roll, to disengage the internal turns from said perforated peripheral wall of the spindle; and during removal of the roll, controlling the air flow by changing an air-flow rate emerging from perforations, from a rear end to a fore end of the perforated wall.

However, the known method has a drawback consisting in an increased power consumption due to high compressed air consumption, which is necessary for providing radial expansion of the roll internal surface during the whole roll winding cycle and for its removal, this method is complex to implement as well.

Thus, the object of the claimed technical solution is to provide technical effects, consisting in reduction of power consumption by decrease of compressed air flow rate, with simultaneous increase of speed and safekeeping of the roll at its removal from the spindle by reduction of friction between the internal roll surface and the spindle surface.

The technical effect in the claimed method of plastic film coreless roll removal from a spindle, comprising pushing of the plastic film coreless roll from the spindle with a perforated wall, according to this invention, is reached by feeding pressurized air-water mixture through the perforated wall at pushing the roll, providing expansion of the inner diameter of the roll.

There are possible embodiments, where:
- the roll is pushed from the spindle using a mechanical pusher;
- and the pressure of the air-water mixture is chosen according to the roll winding density and film elastic deformation value.

Thus, the claimed technical solution by combination of all its features provides reduction of power consumption by decrease of compressed air flow rate, with simultaneous increase of speed and safekeeping of the roll at its removal from the spindle by reduction of friction between the internal roll surface and the spindle surface, as conditions for a dramatic reduction of sliding friction coefficient µ are created due to overcoming of so-called "wet" sliding friction instead of "dry". Additionally, a specific expensive and labor-intensive preliminary treatment of the spindle surface is not needed. Further, using air-water mixture allows to clean the spindle surface from contamination more effectively. Moreover, the air-water mixture coming out into the ambient air of the rewinder working area minimizes electrostatic effect of the wound roll to the operation personnel.

The nature of the claimed method and its implementation will become apparent from the drawing and the following description.

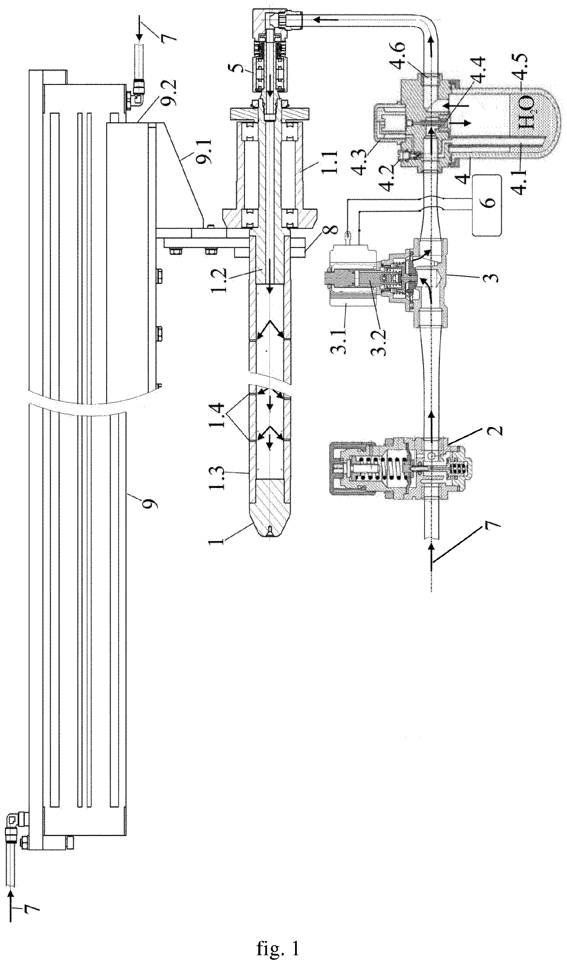

FIG. 1 is a view of the spindle without a roll wounded on it.

A method of plastic film coreless roll removal from a spindle (FIG. 1) consists in pushing a plastic film coreless roll from a spindle 1, wherein the wall of the spindle 1 is perforated, and the air-water mixture is fed through it while pushing the roll, providing expansion of the roll inner diameter.

The claimed method is performed on the winding unit of automatic film rewinder (FIG. 1), comprising the perforated spindle 1, formed from a tubular body 1.3 and made to wind a plastic stretched film roll on it, connected to a pneumatic gearbox 2 electromagnetically driven through a pneumatic valve 3, a dropping bottle 4 and a rotary junction 5. The compressed air is fed to the pneumatic gearbox 2 from the automatic rewinder pneumatic system (not represented in the drawing). The winding unit in the automatic rewinder runs according to an algorithm defined by a controller 6.

Pneumatic gearbox 2 is designed to control compressed air fed through a pipeline 7 from the automatic rewinder pneumatic circuit (not represented in the drawing).

Pneumatic valve 3 is driven by the controller 6. Pneumatic valve 3 comprises a solenoid 3.1, which drives a plunger 3.2.

Injection dropping bottle 4 comprises a water inlet tube 4.1, an adjusting screw 4.2, an access cap-dropper 4.3, an inverted valve 4.4, and dispenses water in its discharge area, where two-phase medium is formed (air-water).

Rotary junction 5 is a mechanical device comprising a sealed bearing assembly, which provides feeding of pressurized air-water mixture from the stationary source, the dropping bottle 4, to the internal cavity of the rotating perforated spindle 1 of the winding unit.

In the winding device (not represented in the drawing), directly over the spindle 1 there is a pusher 8 comprising a metal support mounted on a bracket 9.1 of a moving carriage 9.2 of a rodless pneumatic cylinder 9. The support of the pusher 8 using and together with the carrier 9.2 of the pneumatic cylinder 9 performs forward motion along the axis of the spindle 1 at pushing the roll and backward motion after pushing for returning into the original position.

Spindle 1 comprises a bearing assembly 1.1 with a tubular axis 1.2. Body 1.3 of the spindle 1 can be made of steel or an aluminum alloy with the surface treated to a roughness not more than Ra 1.25 without coatings. Spindle 1 can have an outer diameter, for example, in a range of 25 to 100 mm. In the body 1.3 of the spindle 1 multiple holes 1.4 are formed. The size of the holes (perforations) in the wall of the spindle 1 for air-water mixture output was chosen experimentally (within the range of 0.5-1.0 mm) so as to achieve an optimal performance.

A relative placement of the holes 1.4 provides a uniform stretching of film roll internal layers, the closest to the surface of the spindle 1 perforated wall, for an unobstucted removal of the roll. The same number of holes 1.4 and its position both in an angular direction and along the spindle 1 axis can be freely chosen depending on the length and the outer diameter of the spindle 1, whereby the total area of all perforated holes 1.4 of the spindle 1 is smaller than the open flow area of the rotary junction 5.

Water ejected from the dropping bottle 4 is fed into the compressed air flow. A two-phase air-water mixture with bubble flow is formed inside a pipeline. Water in the bubble flow while moving forms a film along the walls and inside air bubbles. Thus, water is transported from the dropping bottle 4 along the pipeline of the pneumatic system (not represented in the drawing) of the winding unit through the rotary junction 5 towards the spindle 1. A quantity of dispensed water is defined experimentally to achieve maximum performance. On one hand, by a pushing speed compared to dry friction conditions. On the other hand, water leaks on the rewinder are not permitted. The contents of water in the air-water mixture is adjusted by the dropping bottle 4 for achieving the roll's maximum pushing speed, all other conditions being constant.

Internal film layers are stretched due to excessive pressure of the mixture, which is fed at the initial time of roll removal, from the inside of the spindle 1 through its holes 1.4. "Expanding" air pressure depends on the roll winding density and on film elastic deformation, thus, with a higher winding density and a less elastic material a greater air pressure is required. The adjustment range of air pressure fed into the spindle 1 is 8 to 10 bar. For pressure control, the pneumatic gearbox 2 with a pressure gauge is installed in the mains of the spindle 1. The highest water contents in the air at environment temperature of 20°C is up to 17 g/m³ (according to the reference table of saturated water properties) and decreases with the growth of temperature and pressure of the medium.

The claimed method is implemented as follows.

Compressed air from the rewinder pneumatic system (not represented in the drawing) through the pipeline 7 is fed to the pneumatic gear box 2, where the air pressure is reduced.

From the pneumatic gearbox 2 the air goes to the pneumatic valve 3 (normally closed valve). In the end of a film winding cycle on the spindle 1, upon command from the controller 6 a power is applied to a solenoid 3.1 of the pneumatic valve 3, and a solenoid's plunger 3.2 lifts the membrane (not represented in the drawing) and opens access to the compressed air.

The compressed air passes to the double-acting dropping bottle 4. A part of the air through an inverted valve 4.4 goes to a cup 4.5 and starts to force water through a water inlet tube 4.1 in an access cap-dropper 4.3, through which water feeding is visually controlled. Flow rate is adjusted with a screw 4.2, rotation of which causes a change in the open flow cross-section of a water inlet channel (water inlet tube 4.1). Sprayed water is not promptly directed to the output and passes to the cup 4.5 through the inverted valve 4.4, from which only water particles smaller than 3 µm only can pass to an outlet channel 4.6 of the dropping bottle 4.

From the dropping bottle 4, through the pipeline, the air-water mixture in two-phase state passes through the tubular axis of the rotary valve 5 and further through the tubular axis 1.2 of the bearing assembly 1.1 of the perforated spindle 1, into the internal cavity of the spindle 1.

Holes 1.4 are tightly closed by roll's film wound on the spindle 1. There is no exit for the air-water mixture, inside the body 1.3 the pressure grows and overcomes elastic deformation of film internal layers in the roll. Between the internal surface of the roll and the outer surface of the body 1.3 of the spindle 1 a space is formed, which is filled by air-water mixture. The roll is pushed by a pusher 8 from the spindle 1 on a transfer track (not represented in the drawing) of the winding unit, the presence of the roll is defined by a detector (not represented in the drawing), which sends an electrical signal to the controller 6. Controller 6 shuts down the power from the solenoid 3.1 of the pneumatic valve 3, the spring returns the plunger 3.2 of the solenoid 3.1 downwards, and the membrane (not represented in the drawing) closes access to compressed air through the pneumatic valve 3.

### Example.

While pushing the roll from the spindle 1 the mechanical pusher 8 overcomes sliding friction of the film internal layer along the surface of the spindle 1. Friction value is defined according to the equiation: *F_{fr}*=µ*N* , where µ is friction coefficient, which depends on contacting materials and contact conditions (e.g.: presence or absence of a lubricant), N is normal supporting force (in this case, winding force against the spindle 1 surface). A series of tests was held to define dependence of µ on contact conditions. The tests were held with adhering to the following constant conditions:
A pair of contacting materials contains stretch-PE from a roll, and a surface of *Al* alloy with finish not more than Ra 1.25, equal to *N.*

Alternating conditions during the tests were:
1. A series of tests was held without a dividing layer between contacting materials.
2. A series of tests was held, when a water film as a diving layer was between contacting materials.
3. Results of the tests were µ values for conditions 1 and 2. For 1. µ=0.46, for 2. µ=0.29.

Results of µ values can be interpolated to overcoming friction at pushing the film roll from the spindle 1, where a force for pushing the roll from a dry spindle 1 is respectively 1.58 times greater than a force of pushing the roll along dividing water film layer, wherein an advantage of using the dividing water layer is in that for pushing the roll a smaller force for the pusher 8 is required (if present) and respectively smaller power consumption for running the pusher 8.

## Claims

1. A method of plastic film coreless roll removal from a spindle (1), comprising pushing of the plastic film coreless roll from the spindle (1) with a perforated wall, said method being **characterized in that** pressurized air-water mixture is fed at pushing the roll, providing expansion of the inner diameter of the roll.

2. The method of claim 1, wherein pushing the roll from the spindle (1) is effected using a mechanical pusher (8).

3. The method of claim 1, wherein the pressure of the air-water mixture is chosen according to the roll winding density and film elastic deformation value.

## Patentansprüche

1. Verfahren zum Entfernen einer kernlosen Kunststofffolienrolle von einer Spindel (1), umfassend das Schieben der kernlosen Kunststofffolienrolle von der Spindel (1) mit einer perforierten Wand, wobei das Verfahren **dadurch gekennzeichnet ist, dass** das unter Druck stehende Luft-Wasser-Gemisch beim Schieben der Rolle zugeführt wird, wodurch die Ausdehnung des Innendurchmessers der Rolle bereitgestellt wird.

2. Verfahren nach Anspruch 1, wobei das Schieben der Rolle von der Spindel (1) unter Verwendung eines mechanischen Schiebers (8) ausgeführt wird.

3. Verfahren nach Anspruch 1, wobei der Druck des Luft-Wasser-Gemisches gemäß der Wickeldichte der Rolle und dem Wert der elastischen Verformung der Folie ausgewählt wird.

## Revendications

1. Procédé pour enlever d'une broche (1) un rouleau sans âme de film plastique, comprenant la poussée du rouleau sans âme de film plastique depuis la broche (1) ayant une paroi perforée, ledit procédé étant **caractérisé en ce qu'**un mélange eau-air sous pression est introduit lors de la poussée du rouleau, fournissant une expansion du diamètre intérieur du rouleau.

2. Procédé selon la revendication 1, dans lequel la poussée du rouleau depuis la broche (1) est effectuée à l'aide d'un pousseur mécanique (8).

3. Procédé selon la revendication 1, dans lequel la pression du mélange eau-air est choisie en fonction de la densité de bobinage de rouleau et de la valeur de déformation élastique de film.
